# EUROPÄISCHE PATENTANMELDUNG

(11) **EP 2 067 396 A1**
(43) Veröffentlichungstag der Anmeldung: **10.06.2009**
(21) Anmeldenummer: 08019247.9
(22) Anmeldetag: 03.11.2008
(51) Int. Cl.: A01C 7/04

(54) **Pneumatische Einzelkornsämaschine**

(30) Priorität: 07.12.2007 DE 102007053442
(71) Anmelder: Amazonen-Werke H. Dreyer GmbH & Co. KG, 49205 Hasbergen (DE)
(72) Erfinder: Johannaber, Stefan Jan, 49536 Lienen (DE); Götzen, Nils, 47506 Neukirchen-Vluyn (DE); Scheufler, Bernd, Dr., 49205 Hasbergen (DE)

(57) **Zusammenfassung**

Pneumatische Einzelkornsämaschine mit einem Saatgutvorratsbehälter und zumindest einer drehbar angeordneten Vereinzelungstrommel (2), in deren Umfangfläche kreisförmig in Perforationsreihen angeordnete Perforationen angebracht sind, einem Gebläse, mittels welchem eine Druckdifferenz zwischen dem Innenraum (4) der Vereinzelungstrommel (2) und dem Außenbereich (5) der Vereinzelungstrommel (2) erzeugbar ist, so dass, wenn die Vereinzelungstrommel (2) durch den Saatgutvorrat (6) geführt wird, sich an den Perforationen der perforierten Trommel (2) Samenkörner anlagern, wobei der Saatgutvorratsbehälter zwei voneinander beabstandete Seitenwände (9) aufweist, die sich parallel zur Bewegungsrichtung (10) der Trommel (2) erstrecken und mit der Trommel (2) zumindest annähernd abdichtend zusammenwirken, wobei eine die an die Perforationen anliegende Druckdifferenz zum Ablösen der Saatkörnern von den Perforationen unterbrechende Abdeckeinrichtung (21) angeordnet ist, wobei im Bereich der Abdeckeinrichtung (21) und den Perforationsreihen jeweils das eine Ende einer Ausbringleitung (11) mit ihrer Einmündungsöffnung (23) bis an die Trommeloberfläche zumindest annähernd heranreichend angeordnet ist. Um den Einmündungsbereich (23) der Ausbringleitung (11) hinsichtlich der Einleitung der Samenkörner und zu verbessern, sowie strömungstechnisch zu optimieren, ist vorgesehen, dass die Ausbringleitung (11) in ihrem Einmündungsbereich (23) und/oder dem bis an die Trommeloberfläche herarneichenden Endbereich (22) auf ihrem Außenumfang einen umlaufenden fasenartigen Ansatz (24) aufweist, dass der fasenartige Ansatz (24) auf seiner Außenfläche konvex ausgebildet ist.

## Beschreibung

Eine derartige Einzelkornsämaschine ist beispielsweise durch die EP 1 704 764 A1 bekannt. Bei dieser Einzelkornsämaschine ist eine drehbar angeordnete Vereinzelungstrommel vorgesehen, in der in Perforationsreihen die Perforationen angeordnet sind. An diese Perforationen lagern sich Samenkörner an, wenn die mit einer Druckdifferenz beaufschlagten Perforationen durch einen Saatgutvorrat geführt werden. An einer Stelle der Perforationsreihen der Trommel ist eine die an die Perforationen anliegende Druckdifferenz unterbrechende Abdeckeinrichtung angeordnet. In diesem Bereich ist auf der Seite der Trommel, auf welcher die Samenkörner an die Perforation anhaften, das eine Ende einer Ausbringleitung angeordnet. Das Ende der Ausbringleitung ist mit seiner Einmündungsöffnung bis an die Trommeloberfläche zumindest annähernd heranreichend angeordnet. Der Einmündungsbereich der Ausbringleitung ist als senkrechter Schnitt zu der Längsmittellinie der Ausbringleitung ausgestaltet.

Aufgrund dieser Ausgestaltung kann es insbesondere bei kleinen Samenkörnern dazu kommen, dass diese gegen die stirnseitigen Wandungen der Ausbringleitung stoßen. Außerdem ist aufgrund der Breite der Wandung im Eingangsbereich der Ausbringleitung der Bereich der Einmündungsöffnung strömungstechnisch schlecht ausgestaltet.

Der Erfindung liegt die Aufgabe zugrunde, den Einmündungsbereich der Ausbringleitung hinsichtlich der Einleitung der Samenkörner zu verbessern sowie strömungstechnisch zu optimieren.

Diese Aufgabe wird erfindungsgemäß dadurch gelöst, dass die Ausbringleitung in ihrem Einmündungsbereich und/oder dem bis an die Trommeloberfläche heraneichenden Endbereich auf ihrem Außenumfang einen umlaufenden fasenartigen Ansatz aufweist, dass der fasenartige Ansatz auf seiner Außenfläche konvex ausgebildet ist.

Infolge dieses fasenartigen Ansatzes, der auf seiner Außenfläche konvex ausgebildet ist wird eine optimierte Einleitung des Saatkornes in die Einmündungsöffnung der Ausbringleitung, sowie eine strömungstechnische Verbesserung Ausgestaltung des Einmündungsbereiches der Ausbringleitung erreicht. Die durch die Einmündungsöffnung in die Ausbringleitung einströmende Luft sowie die an der Einmündungsöffnung der Ausbringleitung vorbeiströmende Luft wird in laminarer Weise und nicht in turbulenter Weise in die Ausbringleitung und an ihr vorbei geleitet. Der Übergabeprozess des Saatgutes von den Perforationen der Trommel in die Ausbringleitung wird hierdurch strömungstechnisch wesentlich optimiert und verbessert.

Durch konvexe Kontur des Anfangsbereiches der Ausbringleitung im Bereich der Trommeloberfläche wird weiterhin erreicht, dass die Ausbringleitung nur im Einmündungsbereich einen punkt- oder strichartiger Bereich oder Annäherung an die Trommeloberfläche aufweist und sich sofort mit einen stetig steigenden Abstand von der Trommeloberfläche entfernt. Es werden Reibungsbereiche zwischen Ausbringleitung oder den Teilen, in die Ausbringleitung eingefügt ist, vermieden.

Um die Ausbringleitung in einfacher Weise bis an die Trommel in genau definierter Weise heranführen zu können, ist vorgesehen, dass die Ausbringleitungen jeweils mit einem an dem Dosiergehäuse des Dosier- und/oder Vereinzelungsorgans mittels eines Befestigungselementes befestigten Mundstück an das Dosier- und/oder Vereinzelungsorgan zur Entgegennahme der dosierten und/oder vereinzelten Samenkörner angeschlossen sind.

Das Mundstück bildet so die Übergabestelle der von dem Dosier- und Vereinzelungsorgan dosierten und Vereinzelungssamenkörner in die von den Vereinzelungs- und/oder Dosierorganen zu den Saatablageeinrichtungen führenden Ausbringleitungen.

Eine besonders vorteilhafte Ausgestaltung von Gehäuse und Mundstück wird dadurch erreicht, dass das Gehäuse und das Mundstück einstückig ausgebildet sind.

Um in einfacher Weise die Gleichmäßigkeit der Ausbringung der Samenkörner und die Gleichmäßigkeit der Vereinzelung jeder Perforationsreihen überprüfen zu können sind jeder Ausbringleitung Sensorelemente zugeordnet. Eine einfache Anordnung der Sensorelemente lässt sich dadurch erreichen, dass das Mundstück an dem die Sensorelemente aufnehmenden Gehäuse angeordnet ist.

Eine besonders einfache Anordnung des Gehäuses für die Aufnahme der Sensorelemente wird dadurch erreicht, dass das Mundstück in das die Sensorelemente aufnehmenden Gehäuse integriert ist.

Um das Mundstück in einfacher Weise an der Einzelkornsämaschine befestigen zu können, ist vorgesehen, dass die Befestigungselemente zur Befestigung des Mundstückes als das die Sensorelemente aufnehmendes Gehäuse ausgebildet sind.

Eine vorteilhafte Vereinzelung der Saatkörner und eine Erzeugung der Druckdifferenz wird dadurch erreicht, dass der Vorratsbehälter als druckdichter Behälter ausgebildet ist, dass mittels eines Gebläses der Innenraum des Behälters und die Außenseite der Trommel in deren Anlagerungsbereich für die Saatkörner an die Perforationen mit einem Überdruck zur Erzeugung der Druckdifferenz beaufschlagbar ist, und dass die Anfangsbereiche der Ausbringleitungen mit dem Vorratsbehälter in Verbindung stehen.

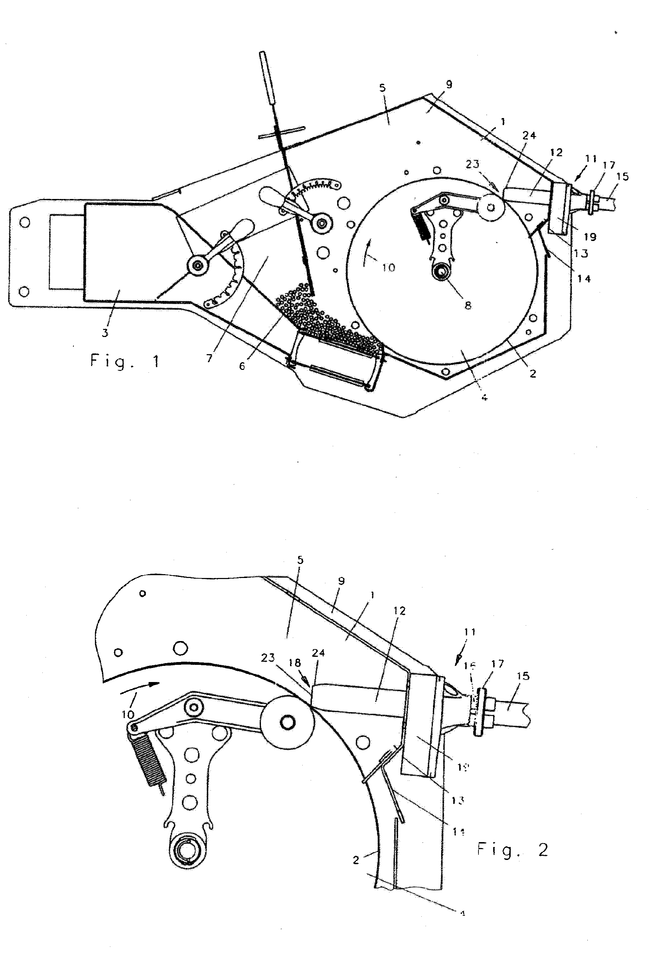

Weitere Einzelheiten der Erfindung sind der Beispielsbeschreibung und den Zeichnungen zu entnehmen. Hierbei zeigen
- Fig. 1: die Vereinzelungsvorrichtung der Einzelkornsämaschine in vereinfachter und ausschnittsweiser Darstellung in Seitenansicht,
- Fig. 2: das Mündstück mit dem einen Sensor autnehmenden Gehäuse und der angeschlossenen Leitung in Seitenansicht, Teilansicht und vergrößertem Maßstab und
- Fig. 3: das Mündstück der Ausbringleitung im Bereich der Vereinzelungstrommel in stark vergrößerter Darstellung in Seitenansicht und in Teilansicht.

Die Sämaschine weist den nicht dargestellten Vorratsbehälter, der in das Gehäuse 1 mündet auf. Unterhalb des Vorratsbehälters befindet sich in dem Gehäuse 1 die drehbar angeordnete und rotierend angetriebene Vereinzelungstrommel 2 auf. In der Umfangsfläche der Vereinzelungstrommel 2 sind in kreisförmig umlaufenden Perforationsreihen die nicht dargestellten Perforationen angeordnet. Der Vorratsbehälter und das Gehäuse 1 oberhalb der Trommel 2 sind zumindest annähernd druckdicht mittels eines nicht dargestellten Deckels verschlossen. Über den Luftanschlusskasten 3 ist der Vorratsbehälter und das Gehäuse 1 oberhalb der Trommel 2 durch das an den Anschlusskasten 3 angeschlossene und nicht dargestellte Druckluftgebläse mit Druckluft beaufschlagbar, so dass die Perforationsreihen mit einer Druckdifferenz zwischen dem Innenraum 4 der Vereinzelungstrommel 2 und dem Außenbereich 5 der Vereinzelungstrommel 2 beaufschlagt werden. Aufgrund dieser Druckdifferenz lagern sich an den Perforationen der Perforationsreihen der Vereinzelungstrommel 2, wenn diese durch den Saatgutvorrat 6, der sich aufgrund der Führung des Saatgutschachtes 7 bis unterhalb der Drehachse 8 der Trommel 2 erstreckt, Samenkörner an. Der Saatgutvorratsbehälter bzw. das Gehäuse 1 unterhalb des Saatgutvorratsbehälters, in dem die Vereinzelungstrommel 2 drehend und abdichtend gelagert ist, weist die voneinander beabstandeten Seitenwände 9 auf, die sich parallel zur Bewegungsrichtung 10 der Trommel 2 erstrecken und mit der Trommel 2 zumindest annähernd abdichtend zusammenwirken.

Den Perforationsreihen sind zu als nicht dargestellten Säscharen ausgebildeten Ablagevorrichtungen führende Ausbringleitungen 11 zugeordnet. Die Ausbringleleitungen 11 sind an Mundstücken 12 angeschlossen. Mittels eines Befestigungsflansches 13 sind die Mundstücke 12 an der Gehäusewandung 14 des Gehäuses 1, welche die Vereinzelungstrommel 2 luftdicht umschließt befestigt. Die Seitenwände 9 sind mit der Gehäusewandung 14 verbunden. Das Mundstück 12 weist auf der der Vereinzelungstrommel 2 abgewandten Seite einen vergrößerten rohrförmigen Bereich auf, in welche die als Schlauch abgebildete Ausbringleitung eingeschoben und über eine auf das Ende 16 des Mundstückes 12 aufgesetzten Schlauchklemme 17 in dem Mundstück festgeklemmt wird. Der der Vereinzelungstrommel 2 zugewandte Bereich 18 des Mundstückes 12 weist einen Innendurchmesser auf, der zumindest annähernd dem Innendurchmesser der Ausbringleitung 15 entspricht.

An dem Flansch 13 des Mundstückes 12 schließt sich ein Gehäuse 19 an. Dieses Gehäuse 19 ist zur Aufnahme von Sensorelementen zum Zählen oder Erfassen kleiner Körperchen, die das Mundstück 12 bzw. die Ausbringleitung 11 von der Vereinzelungstrommel 2 in Richtung der Saatgutablageelemente passieren, ausgebildet. Das Gehäuse 19 und das Mundstück 13 sind einstückig ausgebildet, so dass das Mundstück 12 in das die Sensorelemente aufnehmenden Gehäuse 19 integriert ist. Somit ist das Mundstück 12, in dem die Sensorelemente aufnehmenden Gehäuse 19 angeordnet.

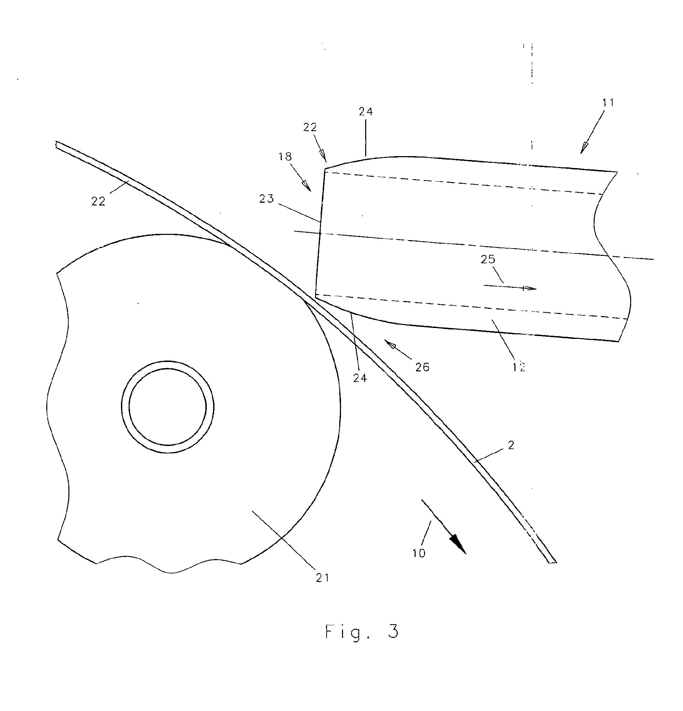

Auf der Innenseite 20 der Vereinzelungstrommel 2 ist die als Rolle ausgebildete, die an die Perforation anliegende Druckdifferenz zum Ablösen der Saatkörner von den Perforation unterbrechende Abdeckeinrichtung 21 angeordnet. Das Ende 22 der Ausbringleitung 11, die von dem Mundstück 1.2 gebildet wird, ist bis an die Trommeloberfläche der Trommel 2 zumindest annähernd heranreichend in dem Bereich, an dem die Rolle 21 der Abdeckeinrichtung angeordnet ist, herangeführt. Die Ausbringleitung 11 weist in ihrem Einmündungsbereich 23 bzw. bis an die Trommeloberfläche heranreichenden Endbereich 22 an ihrem Außenumfang einen umlaufenden fasenartigen Ansatz 24 auf. Dieser fasenartige Ansatz ist auf seiner Außenfläche konvex ausgebildet, wie dies insbesondere die Fig. 3 zeigt. Hierdurch wird erreicht, wie die Fig. 3 zeigt, dass in stetigem Maße vom Einmündungsbereich 23 in Richtung der Strömungsrichtung 25 der Luftströmung innerhalb der Ausbringleitung 11 der Abstand 26 zwischen der Trommeloberfläche der Trommel 2 und dem konvex ausgebildeten fasenartigen Ansatz 24 zunimmt. Hierdurch wird eine Strömungsoptimierung erreicht.

## Patentansprüche

1. Pneumatische Einzelkornsämaschine mit einem Saatgutvorratsbehälter und zumindest einer drehbar angeordneten Vereinzelungstrommel, in deren Umfangsfläche kreisförmig in Perforationsreihen angeordnete Perforationen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen der perforierten Trommel Samenkörner anlagern, wobei der Saatgutvorratsbehälter zwei voneinander beabstandete Seitenwände aufweist, die sich parallel zur Bewegungsrichtung der Trommel erstrecken und mit der Trommel zumindest annähernd abdichtend zusammenwirken, wobei eine die an die Perforationen anliegende Druckdifferenz zum Ablösen der Saatkörnern von den Perforationen unterbrechende Abdeckeinrichtung angeordnet ist, wobei im Bereich der Abdeckeinrichtung und den Perforationsreihen jeweils das eine Ende einer Ausbringleitung mit ihrer Einmündungsöffnung bis an die Trommeloberfläche zumindest annähernd heranreichend angeordnet ist, **dadurch gekennzeichnet, dass** die Ausbringleitung (11) in ihrem Einmündungsbereich (23) und/oder dem bis an die Trommeloberfläche der Trommel (2) heraneichenden Endbereich (22) auf ihrem Außenumfang einen umlaufenden fasenartigen Ansatz (24) aufweist, dass der fasenartige Ansatz (24) auf seiner Außenfläche konvex ausgebildet ist.

2. Einzelkornsämaschine nach Anspruch 1, **dadurch gekennzeichnet, dass** die Ausbringleitungen (11) jeweils mit einem an dem Dosiergehäuse (1) des Dosier- und/oder Vereinzelungsorgans (2) mittels eines Befestigungselementes (13) befestigten Mundstück (12) an das Dosier- und/oder Vereinzelungsorgan (2) zur Entgegennahme der dosierten und/oder vereinzelten Samenkörner angeschlossen sind.

3. Einzelkornsämaschine nach Anspruch 1, **dadurch gekennzeichnet, dass** das Gehäuse (19) und das Mundstück (12) einstückig ausgebildet sind.

4. Einzelkornsämaschine nach Anspruch 1, **dadurch gekennzeichnet, dass** das Mundstück (12) an dem die Sensorelemente aufnehmenden Gehäuse (19) angeordnet ist.

5. Einzelkornsämaschine nach einem oder mehreren der vorstehenden Ansprüche, **dadurch gekennzeichnet, dass** das Mundstück (12) in das die Sensorelemente aufnehmenden Gehäuse (19) integriert ist.

6. Einzelkornsämaschine nach einem oder mehreren der vorstehenden Ansprüche, **dadurch gekennzeichnet, dass** die Befestigungselemente (13) zur Befestigung des Mundstückes (12) als das die Sensorelemente aufnehmendes Gehäuse (19) ausgebildet sind.

7. Einzelkornsämaschine nach einem oder mehreren der vorstehenden Ansprüche, **dadurch gekennzeichnet, dass** der Vorratsbehälter als druckdichter Behälter ausgebildet ist, dass mittels eines Gebläses der Innenraum des Behälters und die Außenseite (5) der Trommel (2) in deren Anlagerungsbereich für die Saatkörner an die Perforationen mit einem Überdruck zur Erzeugung der Druckdifferenz beaufschlagbar ist, und dass die Anfangsbereiche (22, 23) der Ausbringleitungen (11) mit dem Vorratsbehälter in Verbindung stehen.
